# EUROPEAN PATENT APPLICATION

(11) **EP 1 441 349 A1**
(43) Date of publication of application: **28.07.2004**
(21) Application number: 02775456.3
(22) Date of filing: 31.10.2002
(51) Int. Cl.: G11B 23/107

(54) **TAPE REEL AND TAPE CARTRIDGE WITH THE TAPE REEL**

(30) Priority: 01.11.2001 JP 2001337215; 01.11.2001 JP 2001337216; 24.06.2002 JP 2002183718; 26.07.2002 JP 2002218558
(71) Applicant: Sony Corporation, Tokyo 141-0001 (JP)
(72) Inventor: SANPEI, Takaaki; c/o SONY CORPORATION, Shinagawa-ku, Tokyo 141-0001 (JP); KIKUCHI, Shuichi; c/o SONY CORPORATION, Shinagawa-ku, Tokyo 141-0001 (JP); SASAKI, Kazuo; c/o SONY CORPORATION, Shinagawa-ku, Tokyo 141-0001 (JP); SAKURAI, Mitsue; c/o SONY CORPORATION, Shinagawa-ku, Tokyo 141-0001 (JP); KUROKAWA, Toshiya; c/o SONY CORPORATION, Shinagawa-ku, Tokyo 141-0001 (JP); MAEKAWA, Katsumi; c/o SONY CORPORATION, Shinagawa-ku, Tokyo 141-0001 (JP); CHIBA, Hitomi; c/o SONY CORPORATION, Shinagawa-ku, Tokyo 141-0001 (JP)
(74) Representative: Leppard, Andrew John
(86) International application number: PCT/JP2002/011371
(87) International publication number: WO 2003/038824

(57) **Abstract**

A tape reel in which the reliability while running a magnetic tape at high speed is improved and a tape cartridge including the same. By configuring an annular chucking gear (152b) formed in a center section of a bottom surface of a lower flange (152) of a tape reel (150) with a perpendicular wall, idling and floating of the tape reel is suppressed, and thus, the running stability and linearity of the magnetic tape during high-speed rotation of the tape reel (150) are secured, and the reliability of the tape cartridge with regard to high speed operations is improved.

## Description

### TECHNICAL FIELD

The present invention relates to a tape cartridge in which is built a single reel around which a magnetic tape is wound, and more particularly to a tape reel whose reliability while running a magnetic tape at high speed is improved, as well as a tape cartridge equipped with this tape reel.

### BACKGROUND ART

There is known a tape drive which records and reproduces information by pulling out a magnetic tape from a tape cartridge in which is housed a single reel around which the magnetic tape is wound as a recording medium. This kind of tape drive is widely used for backing up system data of computer servers and the like that deal with large amounts of data.

As the above-mentioned tape cartridge equipped with a single reel, there exist various types. For example, ones in which a leader block connected to one end of the magnetic tape is placed inside the housing of the tape cartridge are known. This type of tape cartridge is disclosed in, for example, Japanese Patent Application Publication Hei-6-195933 and Japanese Patent Application Publication 2001-23342.

When a tape cartridge equipped with a leader block is loaded into a tape drive, the leader block is chucked by a chucking mechanism, the leader block is pulled out by a carrying mechanism and is carried to a take-up reel of the tape drive. Information is recorded or read by a magnetic head of the tape drive while the magnetic tape pulled out from the tape cartridge is wound around the take-up reel.

However, such a tape cartridge is often used in cases where large amounts of important data are stored, and reliability from various perspectives is required.

For example, in order to expedite the series of operations in the tape drive, there is also a need to make the tape cartridge one in which the magnetic tape does not get cut or damage and the like to tape edges do not occur, and whose reliability of recording/reproducing operations are high while addressing demands for speeding up the speed of pulling out the leader block, and of fast forwarding and rewinding the magnetic tape.

The present invention is made in view of the problems described above, and makes it its issue to provide a tape reel whose reliability while running a magnetic tape at high speed is improved, as well as a tape cartridge equipped with this tape reel.

### DISCLOSURE OF THE INVENTION

A tape reel of the present invention is a tape reel in which a chucking gear, which engages with a gear section formed on a tip section of a rotational shaft provided in a tape drive apparatus, is formed in the form of a ring, and is characterized in that floating during rotation with respect to the rotational shaft mentioned above is suppressed by having the chucking gear mentioned above be equipped with a pair of side surfaces that are substantially perpendicular to a bottom surface of the tape reel.

In the present invention, by configuring the chucking gear of the tape reel with perpendicular walls, idling and floating of the tape reel are prevented, and thus the stability and linearity in running the magnetic tape while the tape reel is rotating at high speed are secured, and the reliability of the cartridge with respect to high speed operations is enhanced.

In addition, in a tape reel of the present invention, a rotation restricting gear for restricting the rotation of the tape reel is provided on the outer circumference of one of a first and second flange sections. This rotation restricting gear has contact prevention means for preventing contact between the rotation restricting gear mentioned above and a tape when the tape is wound around the tape reel or is supplied from the tape reel.

Thus, damage to edge portions of the magnetic tape is prevented, and the tape becoming cut or a drop in the reliability of recording/reading operations can be prevented.

In addition, in a tape cartridge of the present invention, support means for supporting the tape reel, which is linked with a rotational shaft of a tape drive apparatus and rotates, is placed in a housing, and the support means has a bearing whose outer circumference engages with the tape reel, and an engagement member having a shaft section that engages with the inner circumference of the bearing. The engagement member receives leakage substance leaked from within the bearing, and is equipped with a leakage substance receiving portion that is capable of preventing the leakage substance from being spread within the housing.

Thus, the reliability of the tape cartridge with respect to high speed operations is enhanced.

Further, in a tape cartridge of the present invention, within the housing, there is tape protection means for preventing a tape from becoming cut or damaged due to contact between the tape supplied from the tape reel and an edge portion of an opening portion, which occurs when the leader block is carried through a predetermined path towards the take-up reel of the tape drive apparatus.

Thus, the reliability of the tape cartridge with respect to high speed operations is enhanced.

### BRIEF DESCRIPTION OF THE DRAWINGS

Fig. 1 is a perspective view showing the external appearance of a tape cartridge related to a mode of the present invention;
Fig. 2 is a plan view showing a schematic configuration of a tape drive;
Fig. 3 is a diagram for illustrating operations in the tape drive shown in Fig. 2 after the leader block is pulled out;
Fig.4 is a diagram showing the configuration of a main portion of a chucking mechanism 300;
Fig. 5 is a perspective view of a tape cartridge 100 in a state where an upper shell is removed;
Fig. 6 is a perspective view of a leader block 110 as viewed from the side of the upper shell 102;
Fig. 7 is a perspective view of the leader block 110 as viewed from the side of a lower shell 103;
Fig. 8A is a top view of the leader block 110, Fig. 8B is a side view of the leader block 110 of Fig. 8A as viewed in the direction of arrow B, and Fig. 8C is a bottom plan view of the leader block 110;
Fig. 9 is a sectional view taken along the line A-A of Fig. 8A;
Fig. 10 is a sectional view showing the internal structure of the tape cartridge 100;
Fig. 11 is a front elevational view of a tape reel 150;
Fig. 12 is a diagram for illustrating the shape of a rotation restricting gear 152a;
Fig. 13 is a diagram for illustrating a modification of the shape of a lower flange section 152 of the reel 150;
Fig. 14 is a bottom plan view of the tape reel 150 according to a first mode of the present invention;
Fig. 15 is a sectional view taken along the line [15]-[15] in Fig. 14;
Fig. 16 is a bottom plan view showing a modification of the configuration of the reel 150;
Fig. 17 is a sectional view showing a state in which a rotational shaft is linked with the tape cartridge 100;
Fig. 18A and Fig. 18B are diagrams showing a modification of the configuration of an engagement member 170, where Fig. 18A is a sectional view of a main portion showing a state in which it is assembled with a coil spring 160, and Fig. 18B is a plan view of the engagement member 170;
Fig. 19A and Fig. 19B are diagrams showing another modification of the configuration of the engagement member 170, where Fig. 19A is a main portion sectional view showing a state in which it is assembled with the coil spring 160, and Fig. 19B is a plan view of the engagement member 170;
Fig. 20 is a sectional view showing the structure of the engagement member 170 and a ball bearing 180 in further detail;
Fig. 21 is a plan view showing the structure around the leader block 110 of the tape cartridge 100 in a state where the upper shell 102 is removed;
Fig. 22 is a sectional view of the surroundings of a position in the upper shell 102 opposite a latching recess section 110ca of the leader block 110;
Fig. 23 is a sectional view of the surroundings of a position in the lower shell 103 opposite the latching recess section 110cb of the leader block 110;
Fig. 24 is a diagram showing a state immediately before the chucking mechanism 300 chucks the leader block 110;
Fig. 25 is a diagram showing a state in which a rod member 302 has moved to the inner most section of an insertion section 110a of the leader block 110;
Fig. 26 is a diagram showing a state in which engagement section 303 has engaged with an engagement section 110b of the leader block 110 due to the rising of the rod member 302;
Fig. 27 is a diagram showing a state in which the chucking mechanism 300 has chucked the leader block 110;
Fig. 28 is a sectional view showing the state of a leaf spring 210 provided on the upper shell 102 in a state in which the leader block 110 is raised from the lower shell 103;
Fig. 29 is a sectional view showing the relationship between an engagement protrusion section 103r and an engagement recess portion 110cb in a state where the leader block 110 is raised from the lower shell 103;
Fig. 30 is a diagram showing a state in which the chucking mechanism 300 has been moved outside of the leader block 110 after chucking has failed;
Fig. 31 is a diagram for illustrating re-chucking operations of the chucking mechanism 300;
Fig. 32 is a diagram showing a state in which the leader block 110 is pulled out from the tape cartridge 100;
Fig. 33 is a diagram showing the state of the surroundings of the opening in the tape cartridge in a state where the magnetic tape is guided by movable guides;
Fig. 34 is a perspective view showing the specific structure of the tape drive;
Fig. 35 is a perspective view showing a state in which the leader block is pulled out from the tape cartridge in the tape drive apparatus;
Fig. 36 is a perspective view showing a state in which the pulling out of the leader block from the tape cartridge is completed; and
Fig. 37 is a perspective view showing a state in which the movable guide close to the opening in the tape cartridge has moved to a predetermined position.

### BEST MODES FOR CARRYING OUT THE INVENTION

Modes for carrying out the present invention will be described below with reference to the drawings.

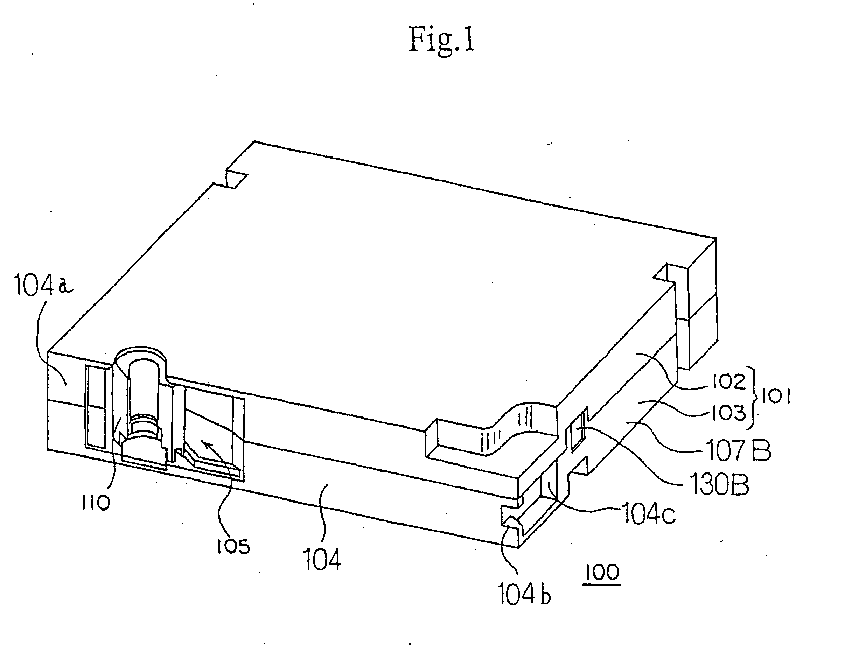

Fig. 1 is a perspective view showing the external appearance of a tape cartridge according to a mode for carrying out the present invention.

As shown in Fig. 1, a tape cartridge 100 according to the present mode includes: a housing 101 in the shape of an approximately rectangular parallelepiped and which is configured with an upper shell 102 and a lower shell 103; and a leader block 110 within this housing 101 and located at an opening 105 formed in a front surface 104 of the housing 101.

The upper shell 102 and the lower shell 103 are molded by injection molding resin, for example, such as polycarbonate and the like.

In addition, one end of a magnetic tape wound around a tape reel, which is not shown, accommodated in the housing 101 is connected through a leader tape to the leader block 110.

The front surface 104 of the housing 101 in which the opening 105 is formed is an insertion side end face of the tape cartridge 100 for a tape drive, and a right end section (the end section on the left side in Fig. 1) adjacent to the opening 105 and a left end opposite thereto have structures that can restrict (lock out) erroneous insertions into a tape drive for tape cartridges having a different format.

In other words, by being designed as a flat section 104a, the right end section becomes a lockout structure against a tape drive for tape cartridges of an LTO type. In the left end section, a notch 104b, which is linked to a recess 104c provided on a left side face 107B that is continuous with the front surface 104, is formed. The notch 104b and recess 104c constitute the lockout structure against a tape drive for tape cartridges of a DLT type.

In addition, the recess 104c is used to position the tape cartridge 100 in the tape drive for the tape cartridge 100.

### (Tape Drive)

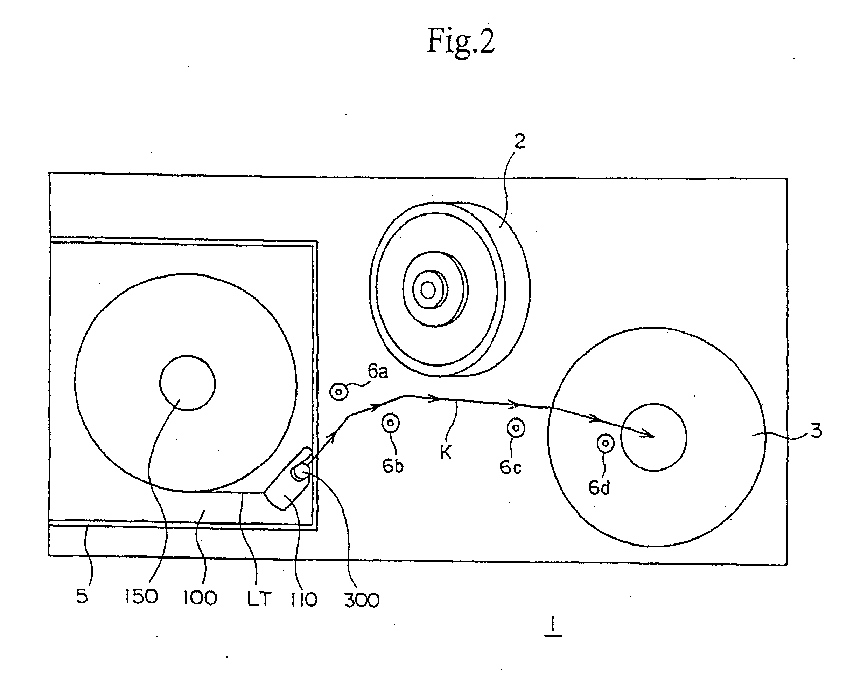

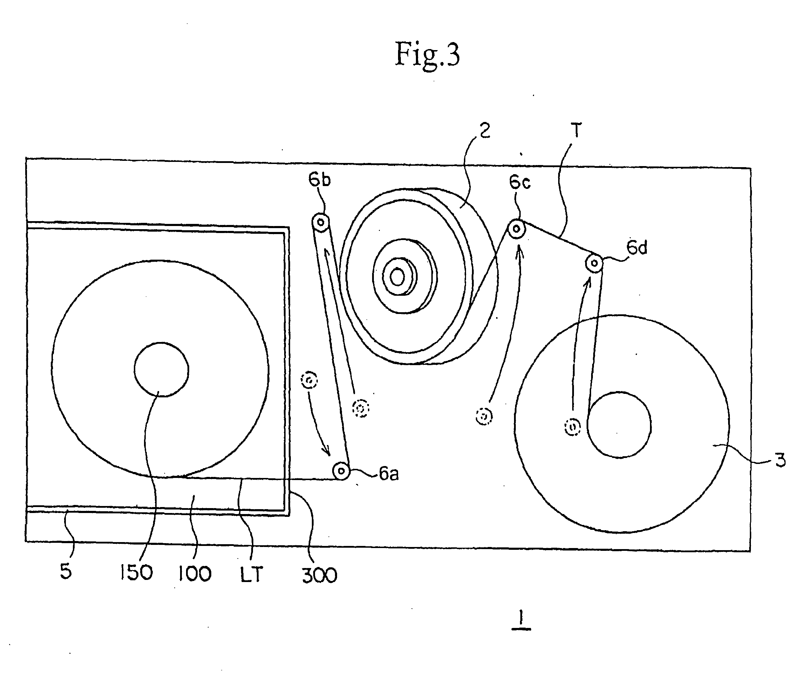

Before describing the specific configuration of the above-mentioned tape cartridge 100, one example of the tape drive, into which the tape cartridge 100 is loaded, and which records data on the magnetic tape wound around the tape reel housed in the tape cartridge 100 and reproduces data from the magnetic tape, is described with reference to Fig. 2 and Fig. 3.

Fig. 2 is a plan view showing a schematic configuration of the tape drive.

In Fig. 2, a tape drive 1 has a head drum 2, a take-up reel 3, a cartridge loading unit 5, a plurality of movable guides 6a to 6d and a chucking mechanism 300.

The take-up reel 3, which is rotated and driven by a drive motor that is not shown in the drawing, winds a leader tape LT wound around a tape reel 150 of the tape cartridge 100 loaded into the cartridge loading section 5 and the magnetic tape connected to this leader tape LT.

The head drum 2 has a magnetic head for recording data on the magnetic tape and reproducing data from the magnetic tape, and is rotated at a predetermined rotation rate during recording or reproduction. This head drum 2 carries out recording or reproduction by the so-called helical scan method.

The plurality of movable guides 6a to 6d are movably provided on a predetermined path by a moving mechanism that is not shown. Then, by moving to predetermined positions, the running path of the magnetic tape supplied from the tape cartridge 100 is defined.

The chucking mechanism 300 chucks the leader block 110 of the tape cartridge 100. This chucking mechanism 300 is linked to a carrying mechanism that is not shown. This carrying mechanism carries the chucking mechanism 300 along path K shown in Fig. 2 towards the take-up reel 3. Thus, the leader block 110 chucked by the chucking mechanism 300 is carried along path K towards the take-up reel 3. The specific structure of the chucking mechanism 300 will be described later.

The reason the leader block 110 is carried along path K to the take-up reel 3 is to guide the magnetic tape, which is supplied by carrying the leader block 110 through a predetermined running path by the plurality of movable guides 6a to 6d.

In other words, the degree of freedom in arranging the plurality of movable guides 6a to 6d is restricted by the dimensions of the tape drive 1 and the like. Thus, unless the leader block 110 is carried in line with the arrangement of the plurality of movable guides 6a to 6d, the plurality of movable guides 6a to 6d can not guide the magnetic tape supplied by the movement of the leader block 110.

When the leader block 110 is carried to the take-up reel 3, the leader block 110 is held at a position, at which the leader tape LT and the magnetic tape can be wound by the take-up reel 3, by a mechanism that is not shown.

Then, for example, as shown in Fig. 3, the plurality of movable guides 6a to 6d are each moved to their predetermined positions, a magnetic tape T supplied from the tape cartridge 100 is guided to a predetermined running path, and the magnetic tape T is wound around half the circumference of the head drum 2. Consequently, the recording of data on the magnetic tape T or the reproducing of data from the magnetic tape T is performed.

### (Chucking Mechanism)

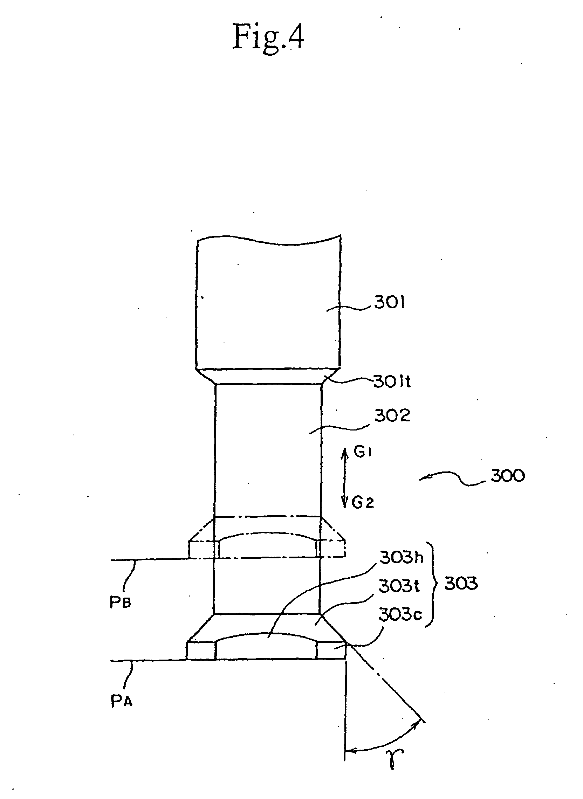

Fig. 4 is a diagram showing the configuration of the main portion of the above-mentioned chucking mechanism 300.

The chucking mechanism 300 has a support section 301, a rod member 302 inserted into this support section 301, and an engagement section 303 formed on a tip portion of the rod member 302.

The support section 301 is held by the carrying mechanism, which is not shown, of the tape drive 1, and is carried by the carrying mechanism towards the take-up reel 3 along path K as described in Fig. 2.

The rod member 302 is inserted into an insertion section of the leader block 110, which will be described later. This rod member 302 includes a cylindrical member, is inserted into the support section 301, and is guided so as to be movable in ascending and descending directions indicated by arrows G1 and G2.

Also, the rod member 302 is constantly biased in the direction towards the support section 301 side indicated by arrow G1 by an elastic member, such as a coil spring and the like that is not shown, which is provided on the support section 301 side.

The engagement section 303 engages with an engagement section of the leader block 110, as described later. This engagement section 303 has an outer circumference surface 303c that is made larger than the outer diameter of the rod member 302, a tapered surface 303t and a flat surface section 303h.

The outer circumference surface 303c is concentric with respect to the-axial center of the rod member 302.

The tapered surface 303t is formed between the outer circumference surface 303c and the rod member 302, and is a surface having the shape of a truncated cone, which is slanted at a predetermined angle γ, for example 45°, relative to the axial center of the rod member 302.

The flat surface section 303h restricts rotation with the rod member 302 of the leader block 110 at the center by contacting a flat section formed on the leader block 110 side when the engagement section 303 is engaged with the engagement section of the leader block 110 as will be described later.

An upper end section, which is not shown, of the above-mentioned rod member 302 is pressed by a pressing mechanism, which is not shown, provided on the support section 301 side, and descends in the direction of arrow G2 against the biasing force, and descends down to the lowest point PA.

When the pressing force of the above-mentioned pressing mechanism is released, the rod member 302 is raised up to the highest point PB by the biasing force of the elastic member.

The chucking mechanism 300 having the above-mentioned configuration holds the leader block 110 between a tapered surface 301t formed at the lower end of the support section and the tapered surface 303t of the engagement section 303.

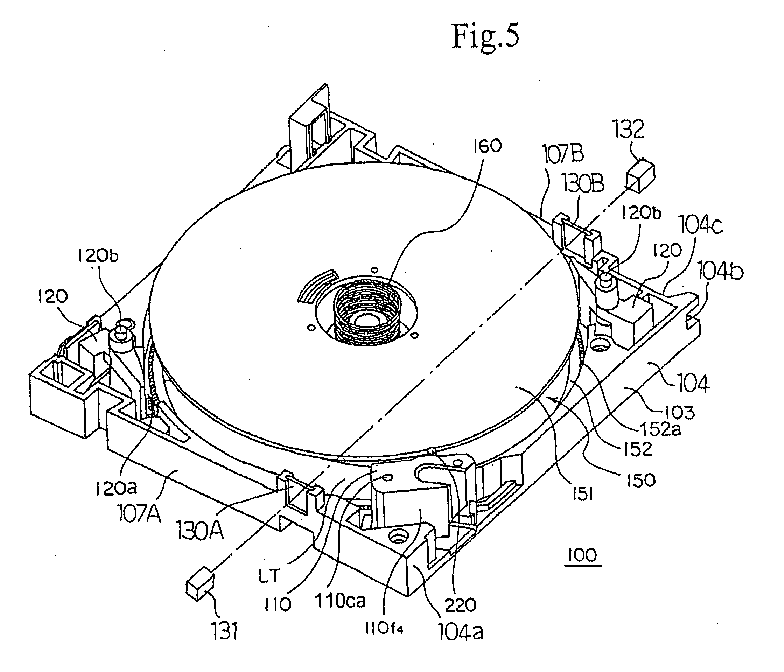

Fig. 5 is a perspective view of a state where the upper shell 102 of the tape cartridge 100 related to the present mode is removed.

As shown in Fig. 5, the tape cartridge 100 has, within a housing configured with the upper shell and the lower shell 103, the leader block 110, the tape reel 150, a coil spring 160, a reel lock member 120 and a contact prevention pin 220. The contact prevention pin 220 is one mode of the "tape protection means" of the present invention.

In addition, window members 130A and 130B made of optically transparent materials are respectively provided on a right side surface 107A and a left side surface 107B which are linked to the front surface 104 of the tape cartridge 100. These window members 130A and 130B face a light emitting unit 131 and a light receiving unit 132, respectively, for detecting the tape end when a magnetic tape is wound by the take-up reel 3 (Fig. 2) of the tape drive 1.

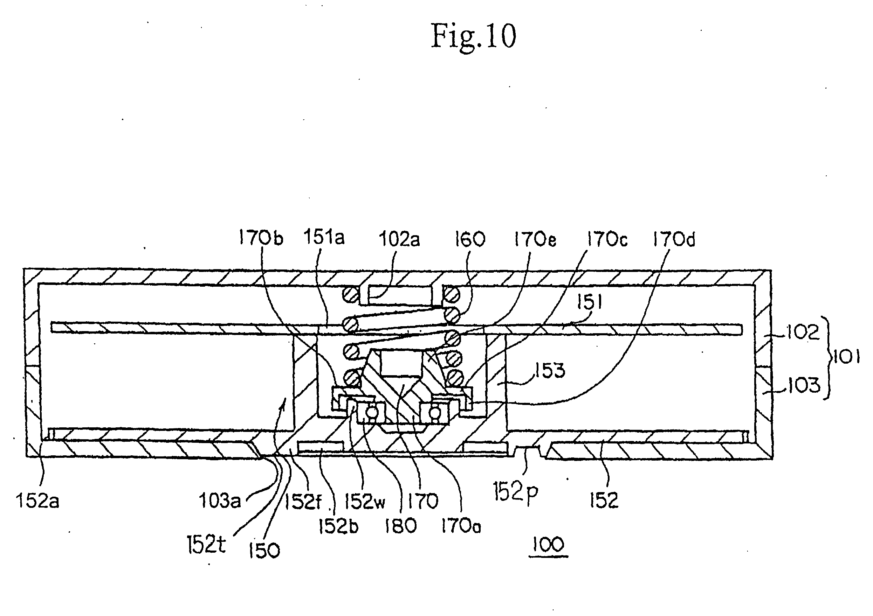

The winding end section of the magnetic tape wound around the tape reel 150 is wound around a drum unit 153 (Fig. 10) of the tape reel 150 via a transparent trailer tape. The fixing of the trailer tape to the drum unit 153 is done through adhesion of the tape surface through alcohol, water or the like. Thus, unless the tape winding operation of the take-up reel 3 is stopped before it becomes impossible to supply the tape from the tape reel 150, the trailer tape peels off from the drum unit 153, and may lead to dysfunction in the tape cartridge.

As such, in the present mode, the tape winding operation by the take-up reel 3 is stopped when the detection light from the light emitting unit 131 enters the interior of the tape cartridge 100 via the window member 130A and the light, which has passed through the trailer tape and is emitted from the other window member 130B, is received by the light receiving unit 132.

### (Leader block)

First, the configuration of the leader block 110 is described.

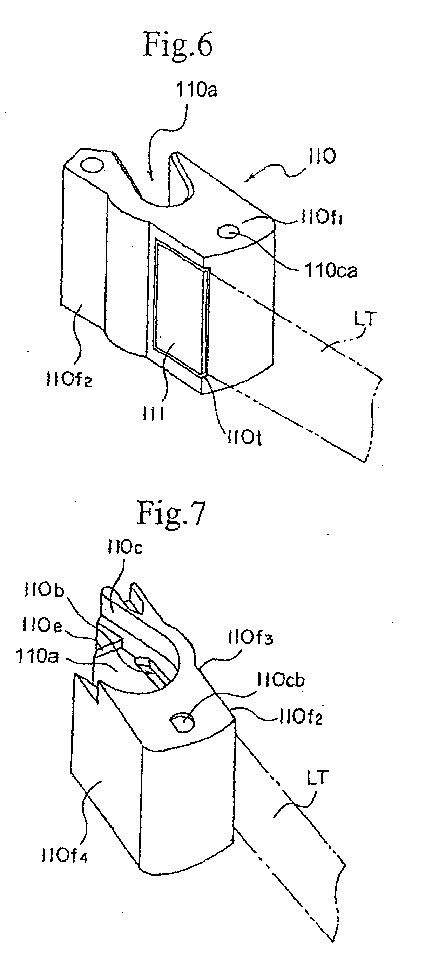

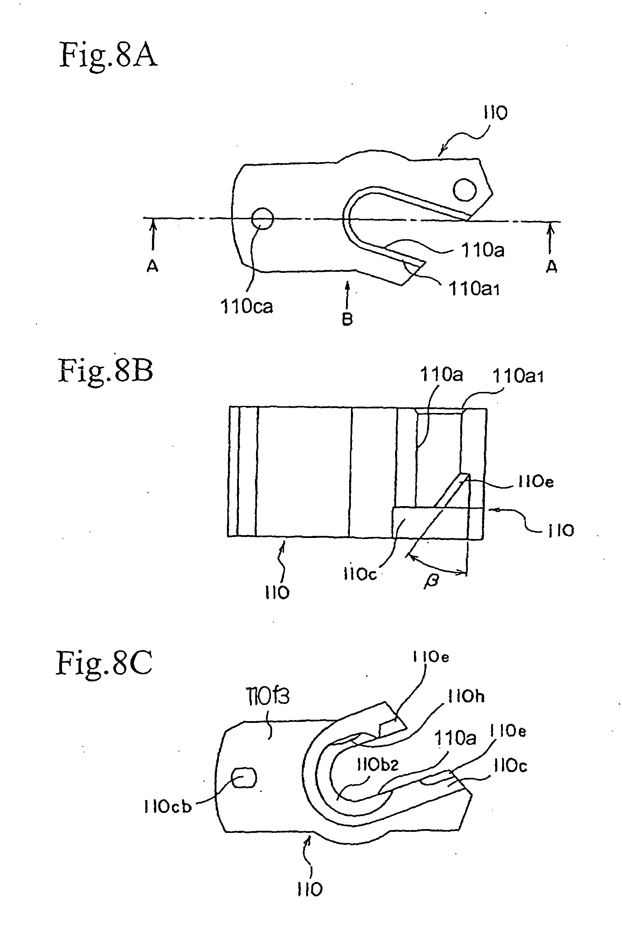

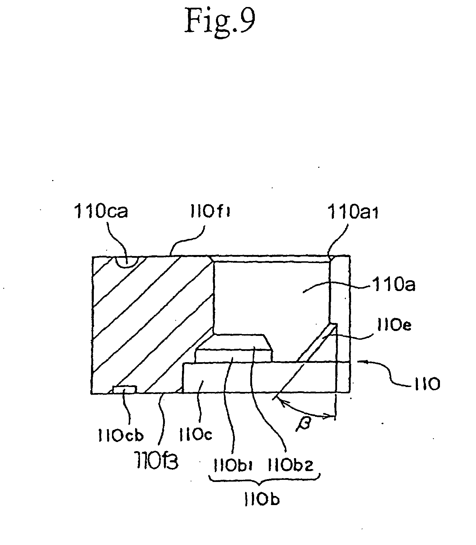

Fig. 6 is a perspective view of the leader block 110 as viewed from the upper shell 102 side, and Fig. 7 is a perspective view of the leader block 110 as viewed from the lower shell 103 side. Fig. 8A is a top view of the leader block 110, Fig. 8B is a side view of the leader block 110 in Fig. 8A as viewed in the direction of arrow B, and Fig. 8C is a bottom view of the leader block 110. And, Fig. 9 is a sectional view in the direction of line A-A in Fig. 8A.

As shown in Fig. 6, the tip section of the leader tape LT is clamped by a clamp member 111 on a side surface 110f2 of the leader block 110.

This clamp member 111 is configured by a member having the shape of a flat plate whose outer diameter is rectangular, and is engaged with and fixed to a groove 110t formed on the side surface 110f2 of the leader block 110. The leader tape LT is held between this clamp member 111 and the groove 110t.

This leader tape LT is connected to the magnetic tape as mentioned above. However, its strength is higher as compared with a magnetic tape so that it does not get cut when the leader block 110 is pulled out.

An insertion section 110a into which the rod member 302 of the above-mentioned chucking mechanism 300 is inserted is formed at the tip section of the leader block 110. This insertion section 110a is formed so as to engage with the rod member 302.

In addition, a tapered surface 110a1, which the tapered plane 301t of the support section 301 of the chucking mechanism 300 contacts, is formed on the upper end section of the insertion section 110a.

As shown in Fig. 6, Fig. 8A and Fig. 9, a latching recess 110ca, which will be described later, is formed on a back end side of an upper surface 110f1 of the leader block 110. This latching recess 110ca is, for example, a semi-spherical recess.

As shown in Fig. 7, Fig. 8C and Fig. 9, an engagement recess 110cb, which will be described later, is formed on a back end side of a bottom surface 110f3 of the leader block 110. This engagement recess 110cb is configured with a non-circular, for example, elliptic recess. The formation position of the engagement recess 110cb generally corresponds to the formation position of the latching recess 110ca. The engagement recess 110cb is one mode of the "recess" of the present invention.

As shown in Fig. 7 and Fig. 9, an engagement section 110b is formed on the lower end side of the insertion section 110a.

The engagement section 110b has a tapered surface 110b2 with which the tapered surface 303t of the engagement section 303 of the above-mentioned chucking mechanism 300 engages; and an engagement surface 110b1 that engages with the outer circumference surface 303c. A flat surface section 110h, which contacts the flat surface section 303h of the engagement section 303, is formed on the engagement surface 110b1 and the tapered plane 110b2 of this engagement section 110b as shown in Fig. 7 and Fig. 8C.

A receiving section 110c is formed on the lower portion of the engagement section 110b. This receiving section 110c has such a width that the engagement section 303 having a larger diameter than the rod member 302 does not interfere when the rod member 302 is inserted and engaged with the insertion section 110a.

As shown in Fig. 7, Fig. 8B and Fig. 9, a guide surface 110e slanted at a predetermined angle β is formed at both lower ends of the insertion section 110a on the entrance side. This guide surface 110e is formed on the upper side of the receiving section 110c. As described later, by having the tapered surface 303t of the engagement section 303 of the chucking mechanism 300 contact this guide surface 110e while the rod member 302 is inserted into the insertion section 110a, the engagement section 303 is guided to the receiving section 110c. The angle β is set to a value smaller than angle γ of the tapered surface 303t of the engagement section 303. For example, if angle γ is 45°, angle β is set to about 40°. Details of the guide surface 110e will be described later.

### (Internal Structure of Tape Cartridge)

Fig. 10 is a sectional view showing the internal structure of the tape cartridge 100.

As shown in Fig. 10, the tape reel 150 is configured with an upper flange section 151 having a circular plate shape and positioned on the side of the upper shell 102, a cylindrical drum section 153, and a lower flange section 152 having a circular plate shape.

The drum section 153 and the lower flange section 152 are integrally molded by injection molding, and the upper flange section 151 is fixed onto the upper end section of the drum section 153, for example, by welding.

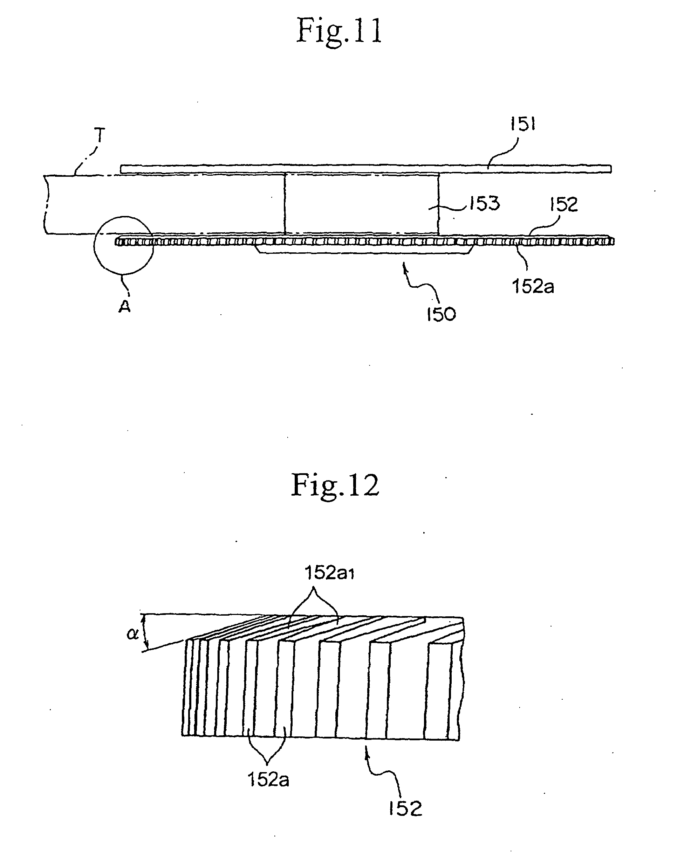

Here, Fig. 11 is a front elevational view of the tape reel 150.

As shown in Fig. 11, the tape reel 150 has the magnetic tape T wound around the outer circumference of the drum section 153, and the upper flange section 151 and the lower flange section 152 guide both sides of this magnetic tape.

In addition, a rotation restricting gear 152a of the tape reel 150 is formed on the outer circumference of the lower flange section 152. This rotation restricting gear 152a engages with gears 120a of the two reel lock members 120 shown in Fig. 5.

The reel lock member 120 is provided on the lower shell 103 so as to be rotatable with a support shaft 120b at the center, as shown in Fig. 5, and a torsion spring, which is not shown, biases the gear 120a in the direction in which it engages with the rotation restricting gear 152a. For this reason, the tape reel 150 is usually in a state where rotation is restricted. The gear 120a of the reel lock member 120 is designed such that the engagement with the rotation restricting gear 152a is released when the tape cartridge 100 is loaded into the cartridge loading section 5 of the tape drive 1.

As shown in Fig. 11, the interval between the upper flange section 151 and the lower flange section 152 is set slightly wider than the width of the magnetic tape T. For this reason, if the magnetic tape T wound around the circumference of the drum section 153 of the tape reel 150 becomes slackened, there is a possibility that the magnetic tape T will enter a state in which it is biased to the side of the upper flange section 151 or the lower flange section 152.

For example, when the supplying or winding of the magnetic tape T is performed in a state where the magnetic tape T is biased to the side of the lower flange section 152 on whose outer circumference the rotation restricting gear 152a is formed, there is a possibility that the magnetic tape T could contact the rotation restricting gear 152a, and the magnetic tape will become cut or damaged by the edge of the rotation restricting gear 152a.

For this reason, in this mode, as an example of contact prevention means for preventing contact between the magnetic tape T and the rotation restricting gear, the shape of the rotation restricting gear 152a is made to resemble the shape shown in Fig. 12. Fig. 12 is an enlarged view of the inside of circle A in Fig. 11.

As shown in Fig. 12, an end surface 152a1 on the side of the rotation restricting gear 152a of the lower flange section 152 opposite the magnetic tape T is a tapered surface slanted at angle α. For this reason, towards the outer circumference of the lower flange section 152, the distance between the magnetic tape T and the end surface 152a1 is further separated. As a result, contact between the magnetic tape T and the rotation restricting gear 152a can be prevented, and the magnetic tape T can be prevented reliably from being cut. The end plane 152a1 is one mode of the "contact prevention means" of the present invention.

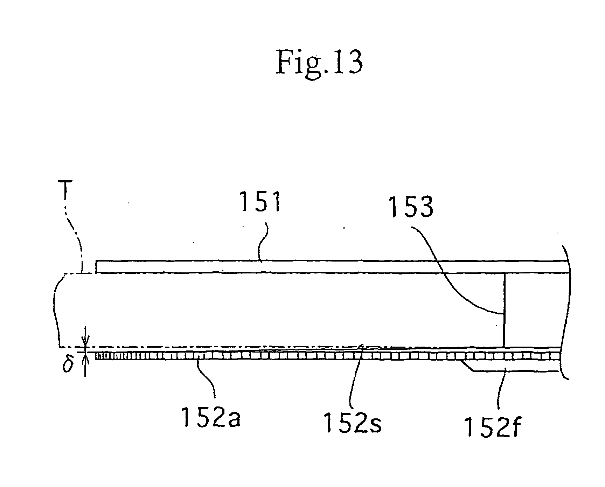

Another mode of the "contact prevention means" of the present invention is shown in Fig. 13. Fig. 13 shows an example in which a surface 152s on the side of the lower flange section 152 of the tape reel 150 opposite the magnetic tape T is formed as a tapered surface slanted at angle δ.

Consequently, since the distance between the magnetic tape T and the surface 152s is more separated towards the outer circumference of the lower flange 152, contact between the magnetic tape T and the rotation restricting gear 152a can be prevented, and the magnetic tape T can be prevented reliably from becoming cut.

In Fig. 10, a circular protrusion section 152f, which engages with a circular opening 103a formed in the lower shell 103, is formed at the central portion on the lower surface side of the lower flange section 152 of the tape reel 150.

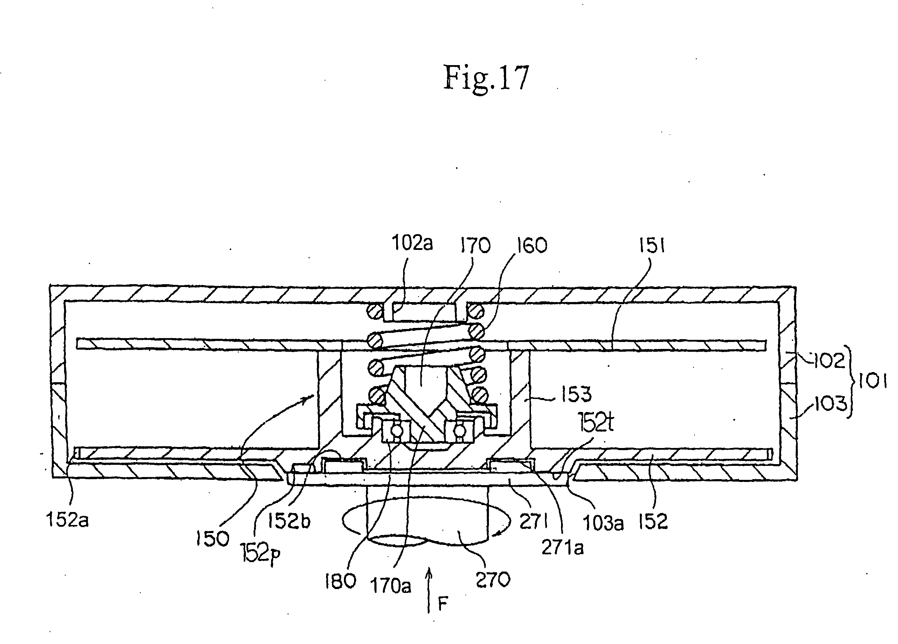

A chucking gear 152b is annularly formed on this protrusion 152f. As will be described later, this gear 152b, in a state where the tape cartridge 100 is loaded into the cartridge loading section 5 of the tape drive 1, engages with a gear 271a (Fig. 17) of a rotational shaft 270 that the tape drive 1 has, and it transmits the rotation of this rotational shaft to the reel 150.

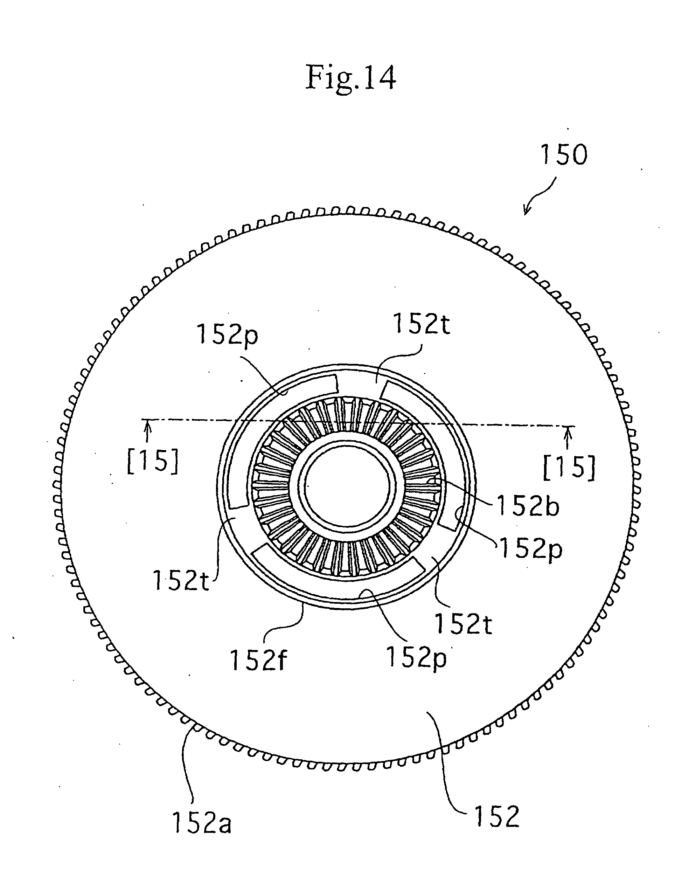

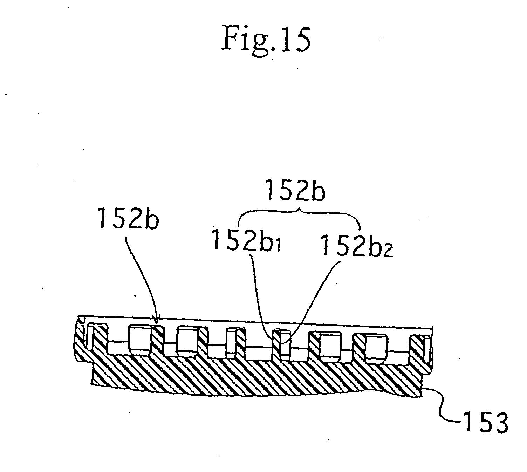

The configuration of the chucking gear 152b formed on the lower surface side of the lower flange section 152 is shown in Fig. 14 and Fig. 15. Fig. 14 is a diagram showing the lower surface side of the lower flange section 152, and Fig. 15 is a sectional view in the direction of line [15] - [15] in Fig. 14.

In this mode, the number of teeth of the chucking gear 152b is 30, which makes the engagement between the tape reel 150 and the gear 271a (Fig. 17) of the rotational shaft 270 easy. In addition, reference surfaces 152t are provided on the same circumference, for example, at intervals of 120°, on the outer circumference side of the chucking gear 152b such that a support section 271 at the tip of the rotational shaft 270 hits the bottom surface of the tape reel 150 at three positions, for example. Reliefs 152p are provided on regions except for the standard surfaces 152t in order to reduce shrinkage and the like of the drum unit 153 serving as the tape winding surface of the tape reel 150 and an improvement in the molding quality is aimed for.

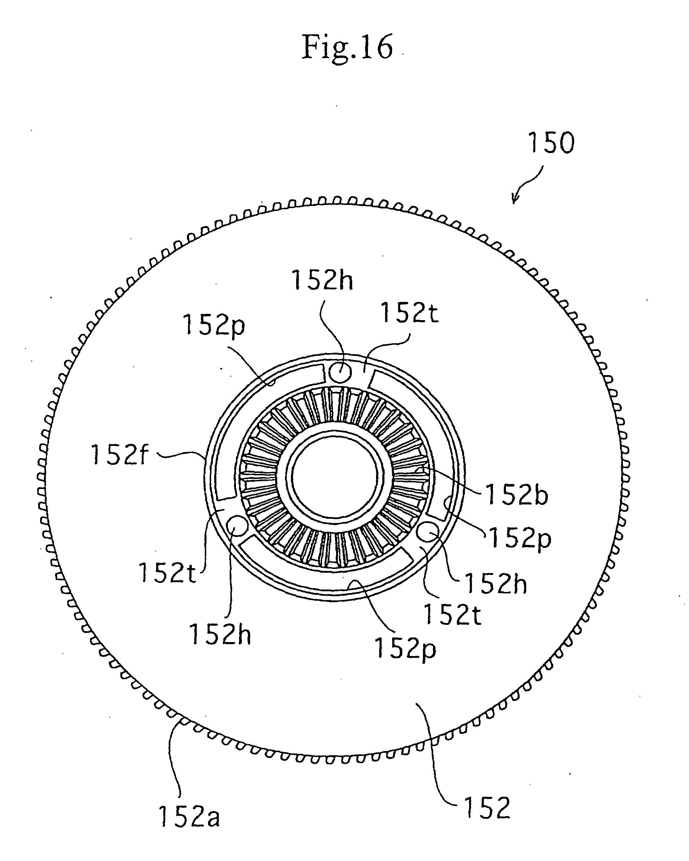

The lower flange section 152 of the tape reel 150 in the present mode is configured with molded products of a synthetic resin material. For example, as shown in Fig. 16, by arranging gate drops (gate positions) 152 within the planes of the reference surfaces 152t, shrinkage of the reference surfaces 152t at the time of molding is prevented.

In Fig. 16, the gate positions 152h are set so as to be biased towards the side of the reference surfaces 152t. This is to ensure a sufficient continuous contact region between the reference surfaces 152t and the support section 271 of the rotational shaft 270. Depending on the size of these reference surfaces 152t, the gate positions 152h may be placed at the center portion of the reference surfaces.

Moreover, as shown in Fig. 15, the chucking gear 152b has a pair of side surfaces 152b1 and 152b2 that are substantially perpendicular with respect to the lower surface of the tape reel. The idling of the tape reel 150 is prevented by having these side surfaces 152b1 and 152b2 engage with the gear 271a of the rotational shaft 270.

In other words, in a conventional chucking gear (not shown) in which an engagement section for a gear of a rotational shaft is a tapered surface, the tape reel did sometimes idle along the tapered surface at the time of engagement. However, in the present mode, the idling of the tape reel is prevented by configuring the engagement section with a vertical wall surface. In addition, when the engagement section is a tapered surface, the tape reel did sometimes float along the tapered surface during high speed rotation. However, through the present mode, it becomes possible to suppress this floating of the tape reel.

The purpose of making the side surfaces 152b1 and 152b2 of the chucking gear 152b substantially perpendicular with respect to the lower surface of the tape reel lies in suppressing the floating of the tape reel 150 with respect to the rotational shaft 270 while the tape reel rotates, as mentioned above. Therefore, it is not a requirement that the side surfaces 152b1 and 152b2 be perfectly perpendicular, and the point is that it is sufficient if they can be judged to be perpendicular apparently.

In Fig. 10, an annular wall section 152w is formed at a center portion on the top surface side of the lower flange section 152 of the tape reel 150, and the outer circumference of a ball bearing 180 is pressed into the inner circumference of this wall section 152w.

A shaft section 170a formed on the lower end side of an engagement member 170 is pressed into the inner circumference of the ball bearing 180.

An insertion section 170e on the top end side of this engagement member 170 is inserted into the inner circumference of the coil spring 160.

The coil spring 160 is provided between the upper shell 102 and the engagement member 170 through a circular opening 151a in the upper flange section 151 of the tape reel 150. The inner circumference of the upper end section of the coil spring 160 is engaged with the outer circumference of an annular rib 102a formed on the upper shell 102, and the lower end section of the coil spring 160 is supported by a top surface 170b of a collar shaped support section 170c that is formed on the outer circumference of the engagement member 170.

This coil spring 160 biases the engagement member 170 towards the lower shell 103. For this reason, the tape reel 150 is pushed against the lower shell 103 by the coil spring 160.

As shown in Fig. 17, when the gear 271a formed on the support section 271 of the rotational shaft 270 that is provided in the tape drive 1 engages with the chucking gear 152b formed on the lower flange section 152, the coil spring 160 biases the lower flange section 152 towards the side of the gear 271a of the rotational shaft 270 to thereby make the engagement between the chucking gear 152b and the gear 271a reliable.

In addition, since the rotational shaft 270 presses the lower flange section 152 in the direction of arrow F in opposition to the biasing force of the coil spring 160, the lower flange section 152 rises from the surface of the lower shell 103, and the tape reel 150 becomes freely rotatable.

The engagement member 170, the ball bearing 180 and the coil spring 160 are examples of the "support means" of the present invention for rotatably supporting, within the housing 101, the tape reel 150 that is linked to the rotational shaft and rotates.

In addition, when the tape cartridge 100 is assembled, the coil spring 160 is assembled by being inserted into the insertion section 170e of the engagement member 170. In this case, there is a problem in that operating efficiency is lowered due to the coil spring 160 being inclined or falling to its side. Also, if the coil spring 160 is assembled in an inclined orientation, the tape reel 150 receives an eccentric load, and becomes unable to perform appropriate rotational operations.

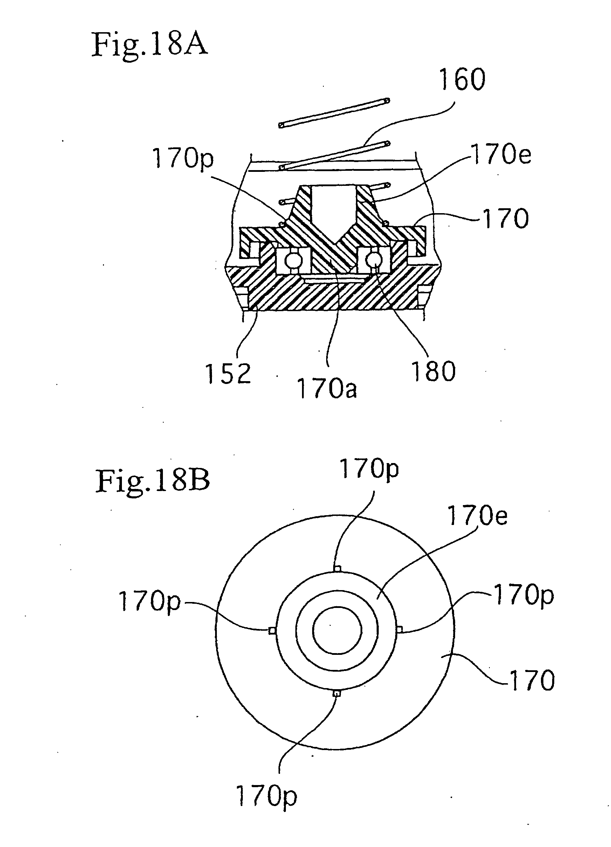

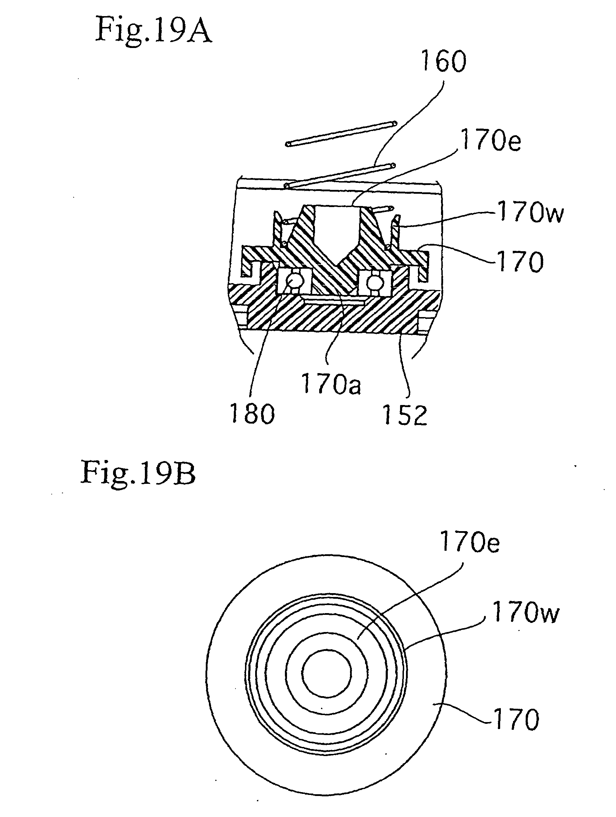

Thus, for example, as shown in Fig. 18A, Fig. 18B, Fig. 19A and Fig. 19B, it is preferable that holding means for holding the assembly orientation of the coil spring 160 be provided on the engagement member 170.

Fig. 18A shows a configuration example in which a plurality of protrusions 170p are integrally formed, as the above-mentioned holding means, around the insertion section 170e of the engagement member 170. The inner circumferential edge of the coil spring 160 is in elastic contact with the protrusions 170p. When assembled, the coil spring 160 is gently press fit onto the insertion section 170e. Consequently, an upright assembly orientation is maintained.

In the present mode, the protrusions 170p are formed at four locations at regular angular intervals around the insertion section 170e, as shown in Fig. 18B. However, the number and position of the protrusions 170p formed are not limited as such.

On the other hand, Fig. 19A shows a configuration example in which a protrusion piece 170w is integrally formed, as the above-mentioned holding device, around the insertion section 170e of the fitting member 170 so as to be opposite the insertion section 170e. The outer circumferential edge of the coil spring 160 is in elastic contact with the inner wall section of the protrusion piece 170w. When assembled, the coil spring 160 is gently press fit onto the insertion section 170e. Consequently, an upright assembly orientation is maintained.

In the present mode, the protrusion piece 170w is formed annularly so as to surround the periphery of the insertion section 170e, as shown in Fig. 19B. However, it is not limited as such, and it may be formed in the shape of an arc at a plurality of positions.

In addition, as shown in Fig. 19A, it is also possible to apply a mode in which the size of the gap formed between the insertion section 170e and the protrusion piece 170w is formed equivalent to the wire diameter of the coil spring 160, and the inner and outer circumferential edges of the coil spring are press fit into the gap.

Because the coil spring 160 can always be assembled appropriately by thus providing the protrusions 170p or the protrusion piece 170w as the holding means, axial run-out of the tape reel especially at the time of high speed rotation can be suppressed, and stable tape running performance can be secured.

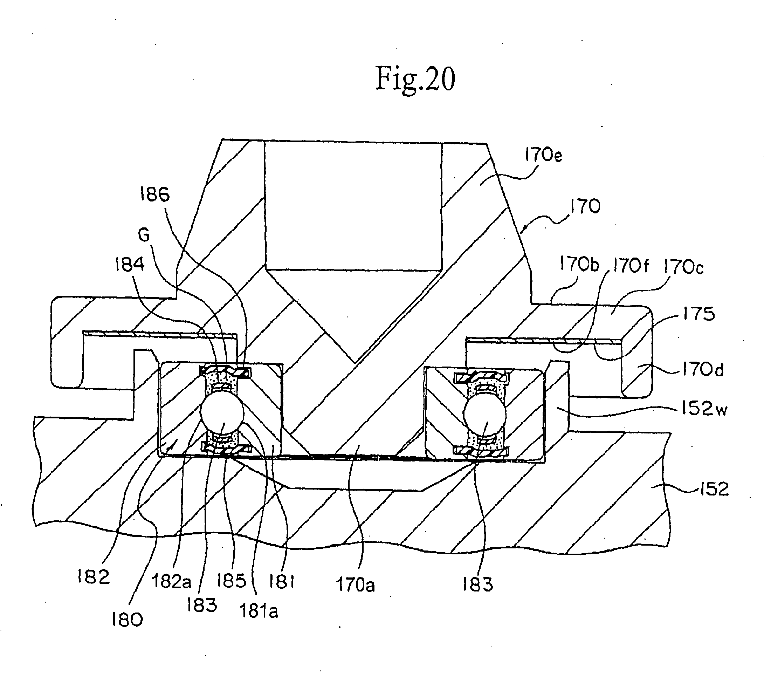

Next, Fig. 20 is a sectional view showing in further detail the structures of the engagement member 170 and the ball bearing 180.

As shown in Fig. 20, the ball bearing 180 holds a plurality of balls 183 between a guide groove 182a formed in an outer ring 182 and a guide groove 181a formed in an inner ring 181, and these balls 183 are held at regular intervals in the circumferential direction by holders 184.

Annular seal members 186 and 185 are provided on the upper end sides and the lower end sides, respectively, of the outer wheel 182 and the inner wheel 181, and lubricating oil G is sealed in the closed space formed by these seal members 186 and 185.

In Fig. 20, on the outer circumference section of the collar-shaped support section 170 mentioned above, the engagement member 170 has a circumferential wall section 170d, which extends towards the lower shell 103 side. This circumferential wall section 170d surrounds the periphery of the upper end side of the ball bearing 180.

Moreover, an annular lubricating oil absorbing sheet 175 for absorbing lubricating oil is provided on a lower surface 170f of the support section 170c of the engagement member 170. This lubricating oil absorbing sheet 175 is made of material that is absorbent of the lubricating oil, for example, a non-woven cloth or the like.

In the ball bearing 180, when the tape reel 150 is rotated, the outer ring 182 rotates. If the tape reel 150 rotates, for example, at a high speed of thousands of rotations per minute, there is a possibility that the lubricating oil G sealed between the outer ring 182 and the inner ring 181 may leak from between the outer ring 182 and the inner ring 181 and may be spread. Since the lower end side of the ball bearing 180 is sealed tight by the surface of the lower flange section 152, the lubricating oil G will never leak. However, with respect to the upper end side, there is a possibility that the lubricating oil G may leak from between the seal member 186 and itself.

If the lubricating oil G leaks from the upper end side of the ball bearing 180, since the outer ring 182 is rotating at a high speed, the lubricating oil G that adheres to the outer ring 182 tends to become spread due to the centrifugal force.

However, since the upper end side of the ball bearing 180 is surrounded by the circumferential wall section 170d and the support section 170c of the engagement member 170, the lubricating oil G that is spread is received by the inner circumference surface of the circumferential wall section 170d and the lower surface 170f of the support section 170c.

The inner circumference section of the circumferential wall section 170d and the lower surface 170f of the support section 170c are one example of the "leakage substance receiving section" of the present invention, which receives the lubricating oil, which is the leakage substance leaked from within the ball bearing 180, and prevents the lubricating oil from being spread within the housing 101.

Thus, the circumferential wall section 170d and the support section 170c of the engagement member 170 function as a cap for preventing the lubricating oil G that is leaked from the ball bearing 180 from being spread within the housing 101.

In addition, the lubricating oil G that is spread towards the lower surface 170f of the support section 170c is absorbed by the lubricating oil absorbing sheet 175 provided on this lower surface 170f. Consequently, contamination inside the housing 101 caused by the lubricating oil G that is leaked from the ball bearing 180 is prevented reliably. In addition, the lubricating oil absorbing sheet 175 may be provided not only on the lower surface 170f of the support section 170c but also on the inner circumference surface of the circumferential wall section 170d.

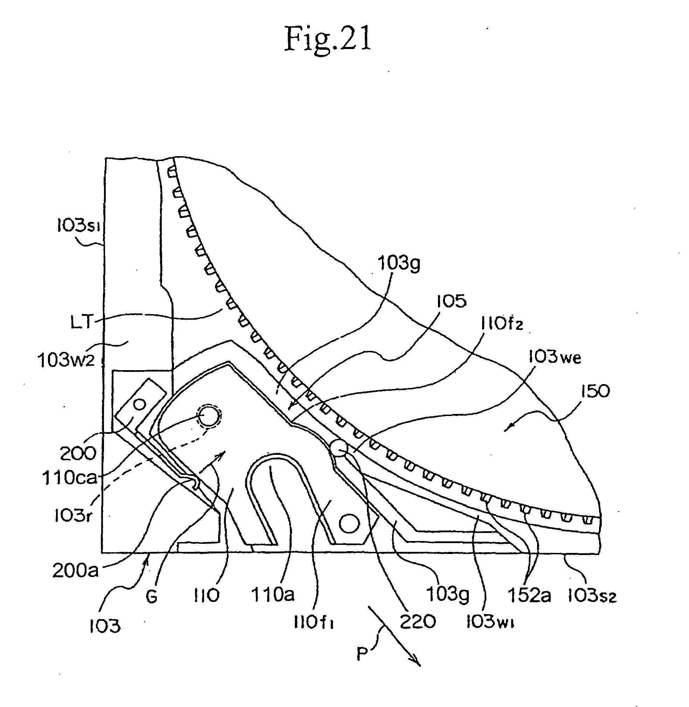

Fig. 21 is a plan view showing the structure of the periphery of the leader block 110 of the tape cartridge 100 in a state where the upper shell 102 is removed.

In Fig. 21, a wall section 103w1 that is erected along the outer circumference of the tape reel 150 linked continuous with a side 103s2, and a wall section 103w2 constituting a side surface 103s1 of the lower shell 103 are formed on the lower shell 103. Although not shown, wall sections corresponding to the wall sections 103w1 and 103w2 are also formed on the upper shell 102. The opposing surfaces of these wall sections and the wall sections 103w1 and 103w2 of the lower shell 103 are in contact with each other.

In addition, the wall section 103w1 of the lower shell 103 ends at an edge section 103we, and the opening 105 for pulling out the magnetic tape wound around the tape reel 150 is formed between this edge section 103we and the wall section 103w2.

A contact prevention pin 220 is fixed adjacent to the edge section 103we on the lower shell 103. This contact prevention pin 220 extends up to the upper shell 102. The contact prevention pin 220 is a cylindrical member made of a metal.

On the lower shell 103, a guide rib 103g is formed from the wall section 103w1 to the wall section 103w2. This guide rib 103g is formed such that its height is lower than the wall section 103w1 and the wall section 103w2. In addition, although not shown, a guide rib corresponding to the guide rib 103g is also formed on the upper shell 102.

The guide rib 103g is formed in a shape conforming to the shape of the side surface on one side of the leader block 110. This guide rib 103g positions the leader block 110 at a closing position where the above-mentioned opening 105 is closed, while at the same time serving the role of guiding the leader block 110 in the pull-out direction P. In addition, the pull-out direction P is the direction in line with path K explained in Fig. 2, and this pull-out direction P is inclined at a predetermined angle, for example, an angle of 45°, with respect to a side surface 103s of the lower shell 103.

A leaf spring 200 is provided on the wall section 103w2 of the lower shell 103. This leaf spring 200 is one mode of the "biasing means" of the present invention. The leaf spring 200 as one example of the "biasing means" of the present invention for biasing the leader block towards the rib has its base end side fixed to the wall section 103w2 of the lower shell 103 with a pin, and a tip section 200a biases the side surface of the leader block 110 in the direction of arrow G. The direction of arrow G is the direction in which the side surface of the leader block 110 is pressed against the guide rib 103g.

As mentioned above, the latching recess 110ca is formed on the top surface 110f1 of the leader block 110, and the engagement recess 110cb is formed on the lower surface 110f3.

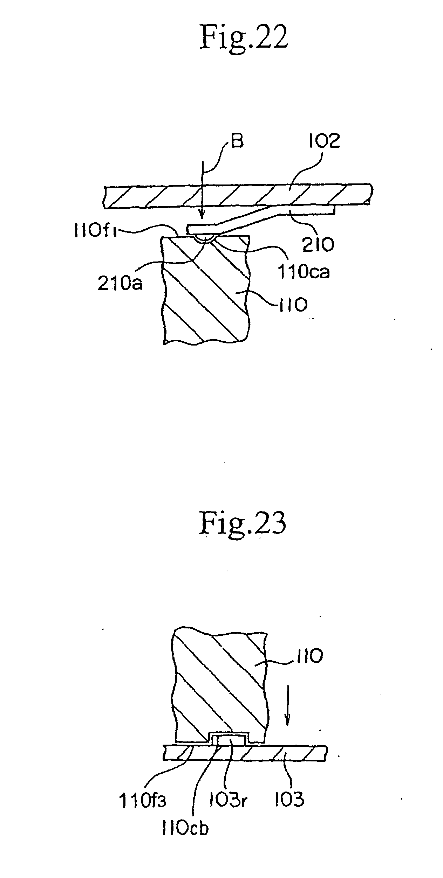

A leaf spring 210 is provided at a position opposite the latching recess 110ca of the leader block 110 on the upper shell 102, as shown in Fig. 22. This leaf spring 210 is one mode of the "elastic means" of the present invention.

The leaf spring 210 has its base end side fixed to the upper shell 102, and a semi-spherical section 210a formed at the tip section is engaged with the latching recess 110ca. This leaf spring 210 biases the leader block 110 in the direction indicated by arrow B, namely, towards the lower shell 103 side.

An engagement protrusion 103r is formed at the position opposite the engagement recess 110cb of the leader block 110 on the lower shell 103, as shown in Fig. 23. This engagement protrusion 103r has a shape that matches the non-circular engagement recess 110cb. By engaging this engagement protrusion 103r and the engagement recess 110cb, the leader block 110 is positioned at the closing position defined by the above-mentioned guide rib 103g, while the rotation of the leader block 110 is restricted. In addition, the engagement between the engagement protrusion 103r and the engagement recess 110cb is such that it is difficult to break because of the biasing force of the leaf spring 210.

The engagement protrusion 103r and the engagement recess 110cb constitute one mode of the engagement means of the present invention, and the leaf spring 210 is one example of the elastic means for biasing the leader block so as to maintain the engaged state of the engagement means of the present invention.

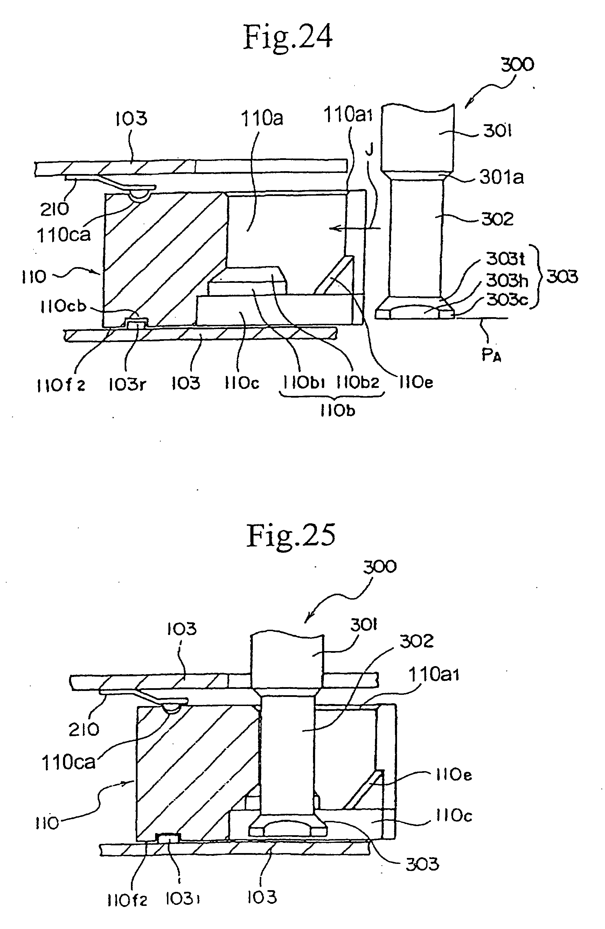

The chucking operation and the pulling operation of the leader block 110 when the tape cartridge 100 having the above-mentioned configuration is loaded into the tape drive 1 will be described below with reference to Fig. 24 to Fig. 33.

### (Chucking Operation)

First, the tape cartridge 100 is loaded into the cartridge loading section 5 of the tape drive 1.

Next, the chucking mechanism 300 chucks the leader block 110.

Fig. 24 is a sectional view showing the relationship between the chucking mechanism 300 and the leader block 110 before the chucking mechanism 300 chucks the leader block 110. In addition, the leader block 110 in Fig. 24 is a sectional view in the direction of line A-A in Fig. 8A.

In Fig. 24, the rod member 302 of the chucking mechanism 300 is pressed down in opposition to the biasing force, and the engagement section 303 is located at the lowest point PA. When, from this state, the support section 301 is moved in the direction of arrow J and the rod member 302 is inserted into the insertion section 110a of the leader block 110, the engagement section 303 enters the receiving section 110c of the leader block 110.

As shown in Fig. 25, at the point where the rod member 302 is moved to the deepest portion of the insertion section 110a of the leader block 110, the pressing force for bringing down the rod member 302 in opposition to the biasing force is released.

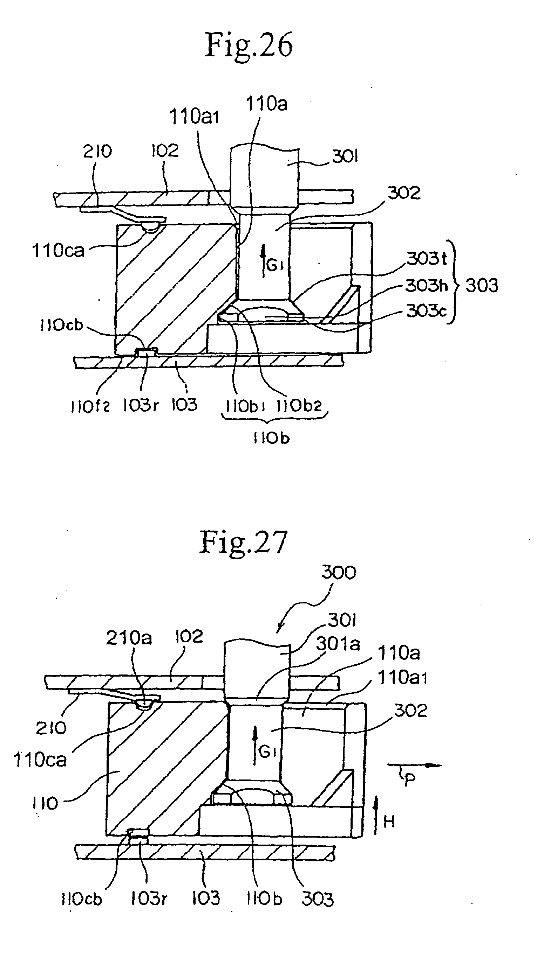

As shown in Fig. 26, this releasing of the pressing force causes the rod member 302 to rise in the direction of arrow G1, and the engagement section 303 engages with the engagement section 110b. Consequently, the flat section 303h of the engagement section 303 contacts the above-mentioned flat section 110h of the leader block 110. The leader block 110 has its rotation around the shaft center of the rod member 302 restricted.

Once the engagement section 303 is engaged with the engagement section 110b, and further, the rod member 302 rises in the direction of arrow G1, as shown in Fig. 27, the leader block 110 rises in the direction of arrow H, the tapered surface 110a1 of the insertion section 110a of the leader block 110 contacts the tapered surface 301a formed on the support section 301 of the chucking mechanism 300, and the rising of the rod member 302 and the leader block 110 is stopped, and chucking is completed.

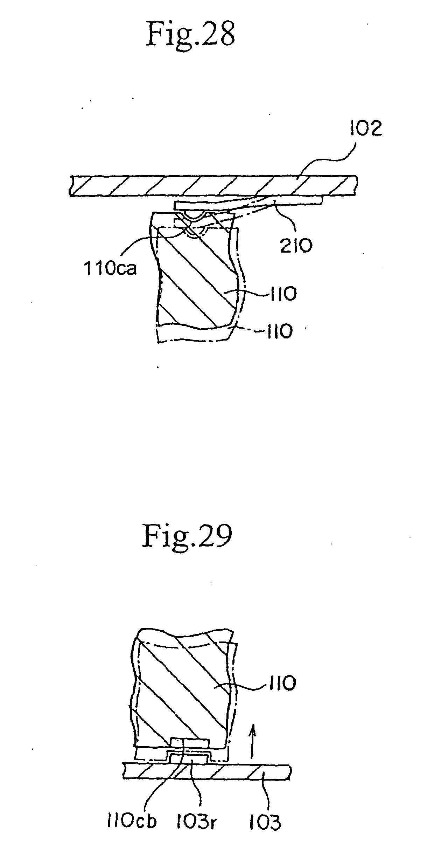

Fig. 28 is a sectional view showing the state of the leaf spring 210 provided on the upper shell 102 in a state where the leader block 110 is raised from the lower shell 103, and Fig. 29 is a sectional view showing the relationship between the engagement recess 110cb and the engagement protrusion 103r in a state where the leader block 110 is raised from the lower shell 103.

As shown in Fig. 28, due to the rising of the leader block 110, the leaf spring 210 is elastically deformed towards the upper shell 102 side.

On the other hand, as shown in Fig. 29, the engagement protrusion 103r and the engagement recess 110c are now in a state in which the engagement is released. Consequently, the leader block 110 becomes able to move from the above-mentioned closing position.

From this state, the leader block 110 is pulled out by moving the support section 301 shown in Fig. 27 in the pull-out direction P.

Here, the process when the above-mentioned chucking operation is not properly carried out is explained.

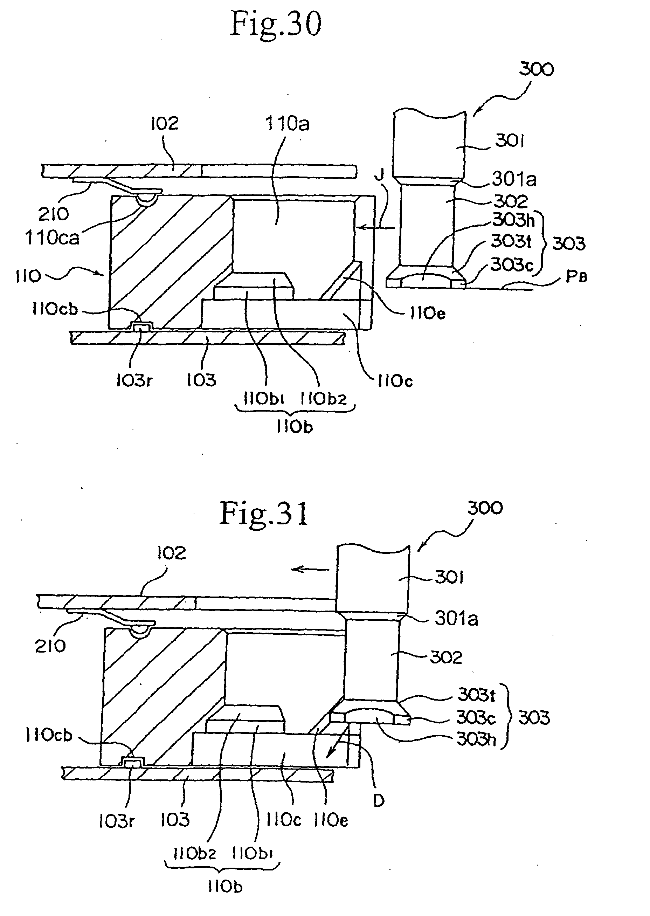

If the chucking of the leader block 110 is not properly carried out by the chucking mechanism 300, as shown in Fig. 30, the support section 301 is moved towards the outside of the leader block 110.

When the support section 301 is moved outside the leader block 110, since the pressing force on the rod member 302 is released, the engagement section 303 rises to the highest point PB due to the biasing force of the elastic member. At the position of this highest point PB, the engagement section 303 is at a position higher than the receiving section 110c.

By moving it from this state in the direction of arrow J of the support section 301, the rod member 302 is reinserted into the insertion section 110a of the leader block 110.

Since the engagement section 303 has a larger diameter than the diameter of the insertion section 110a, the engagement section 303 can not be made to enter the insertion section 110a. However, the guide surface 110e is formed on the lower end section of the insertion section 110a, and the width of this portion is wider. Consequently, the tapered surface 303t of the engagement section 303 contacts the guide surface 110e. As shown in Fig. 31, the engagement section 303 is guided by the guide surface 110e, and descends in the direction of arrow D, and again descends down to the receiving section 110c.

Consequently, even in a case where the chucking operation was not performed properly, the chucking operation can be performed again.

### (Pulling Operation)

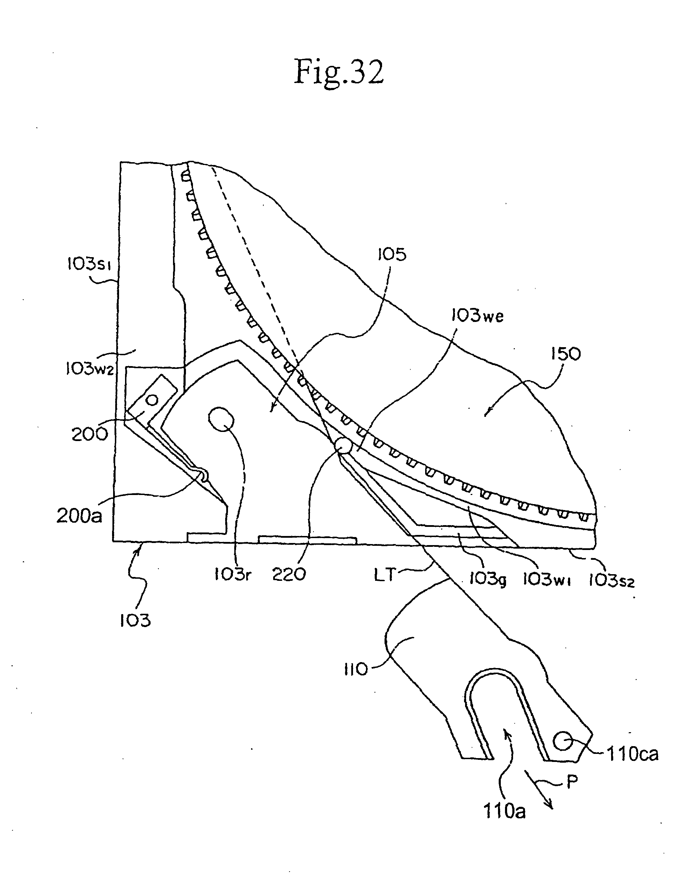

After the leader block 110 is chucked, by having the chucking mechanism 300 carried along path K, as shown in Fig. 32, the leader block 110 is pulled out in the pull-out direction P.

Since the pull-out direction P is a direction inclined with respect to the side surface 103s2 of the lower shell 103, the leader tape LT that is supplied by the pulling out of the leader block 110 also moves in a direction inclined with respect to the side surface 103s2. For this reason, the leader tape LT tries to contact the edge section 103we of the opening 105. However, since the contact prevention pin 220 is placed between this edge section 103we and the leader tape LT, the leader tape LT contacts the circumferential surface of the contact prevention pin 220. Because the circumferential surface of the contact prevention pin 220, which is one example of the "tape protection means" of the present invention for preventing the tape from becoming cut or damaged due to contact between the edge section of the opening and the tape supplied from the tape reel, is a smooth and curved surface (cylindrical surface), the leader tape LT is never cut nor damaged.

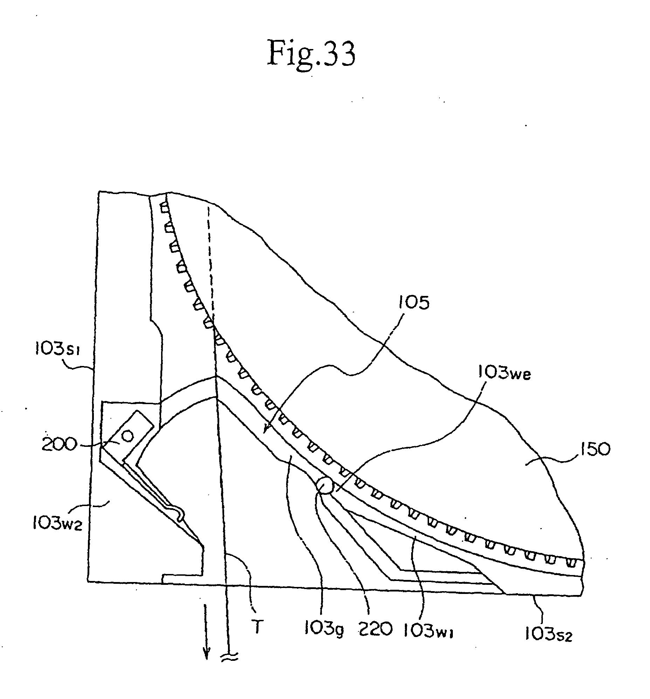

After the leader block 110 is pulled out in the pull-out direction P and reaches the take-up reel 3, the plurality of movable guides 6a to 6d of the tape drive 1 each move to their predetermined positions. Consequently, as shown in Fig. 33, because the magnetic tape T that is supplied from the tape cartridge 100 subsequent to the leader tape LT is guided through a predetermined running path, it does not contact the edge section 103we at the opening 105 of the tape cartridge 100.

Thus, according to the present mode, when the leader block 110 is pulled out from the tape cartridge 100, the leader tape LT no longer becomes cut by contacting the edge section 103we of the opening 105. As a result, it is possible to speed up the pulling operation of the leader block 110.

In addition, even if the magnetic tape T wound around the tape reel 150 is slackened after the leader block 110 is pulled out from the tape cartridge 100, it does not contact the rotation restricting gear 152a formed on the outer circumference of the lower flange section 152 of the tape reel 150, and it is possible to prevent the magnetic tape T from becoming cut while being run. As a result, it is possible to speed up the running speed of the magnetic tape T.

In connection therewith, the chucking gear 152b of the tape reel 150 has a configuration such that it engages with the rotational shaft 270 of the tape drive 1 through the pair of side surfaces 152b1 and 152b2. Thus, it is possible to prevent the tape reel 150 from floating during high speed rotation of the tape reel 150, and to maintain the separation length between the magnetic tape T and the rotation restricting gear 152a, thereby making tape protection more effective.

Moreover, in the tape cartridge 100 of the present mode, because the window members 130A and 130B for detecting the tape end are provided on the right side surface 107A and the left side surface 170B, respectively, it is possible to detect the supplying of the trailer tape linking the magnetic tape T and the tape reel 150 at an early stage.

In other words, because this detection of the trailer tape, which was conventionally performed outside the cartridge, is performed inside the cartridge in the present mode, optimization of wind stop control can be attained for the rotational shaft 270 and the take-up reel 3 of the tape drive 1, and it is possible to sufficiently accommodate an increase in the tape winding speed. Also, it is possible to realize a decrease in the tape length of the trailer tape and an increase in the tape length of the magnetic tape, thereby further expanding recording capacity

Moreover, according to the present mode, by locking the housing 11 at the closing position by the engagement between the engagement protrusion 103r and the engagement recess 110cb, and the biasing force of the leaf spring 210, and in addition, by pressing the leader block 110 against the guide rib 103g by the biasing force of the place spring 200, it is possible to reliably prevent the leader block 110 from falling from the housing 101 and from being moved from the closing position due to physical impact or operation by people. As a result, it is possible to reliably prevent dust from entering the housing 101 due to the opening 105 being left open.

In addition, according to the present mode, even if the lubricating oil leaks from the ball bearing 180 that rotatably supports the tape reel 150, because the lubricating oil is not dispersed within the housing 101 and contamination inside the housing 101 can be prevented, high speed rotation of the tape reel 150 becomes possible.

Hereinabove, modes for carrying out the present invention have been explained. Of course, the present invention is not limited thereto. Various modifications are possible based on the technical idea of the present invention.

For example, in the above-mentioned modes, descriptions were given taking a case where a ball bearing is used as the bearing for rotatably supporting the tape reel 150 as an example. A ball bearing is a bearing that is suitable in cases where high speed rotation is carried out with a relatively low load. However, bearings other than ball bearings can be also used.

In addition, in the above-mentioned modes, descriptions were given with respect to a case where the rotation restricting gear is formed on the lower flange section. However, the present invention can be applied even in cases where the rotation restricting gear is formed on the upper flange section.

In addition, in the above-mentioned modes, descriptions were given with respect to a case where a leaf spring is used as an example of the elastic means and the biasing means of the present invention. However, a different spring, such as a coil spring or the like, may also be used.

In addition, in the above-mentioned modes, descriptions were given with respect to a case of lubricating oil as the lubricant. However, the present invention is not limited to liquid lubricating oil, but may also be applied to bearings that use grease, which is a semi-solid or solid lubricant, and the like.

In addition, in the above-mentioned modes, descriptions were given taking lubricating oil as an example of the leaked substance of the present invention. However, in the leakage section of the bearing, besides this, there also exist abraded powder from abrasion between the components and the like. The present invention may also be applied to cases where such a leakage section exists.

In addition, in the respective modes above, descriptions were given taking a tape cartridge of a form having the leader block 110 as an example. However, the tape reel 150 related to the present invention is not limited to tape reels for tape cartridges of the form above, but may also be applied to tape reels for tape cartridges of a different form which are without the leader block.

In this case, the present invention is applicable not only to tape reels for single-reel type tape cartridges, but also to each of the tape reels of tape cartridges housing a pair of tape reels.

The configuration of the tape drive 1 in the above-mentioned modes is hypothetical and is presented in order to make features of the present invention clearer.

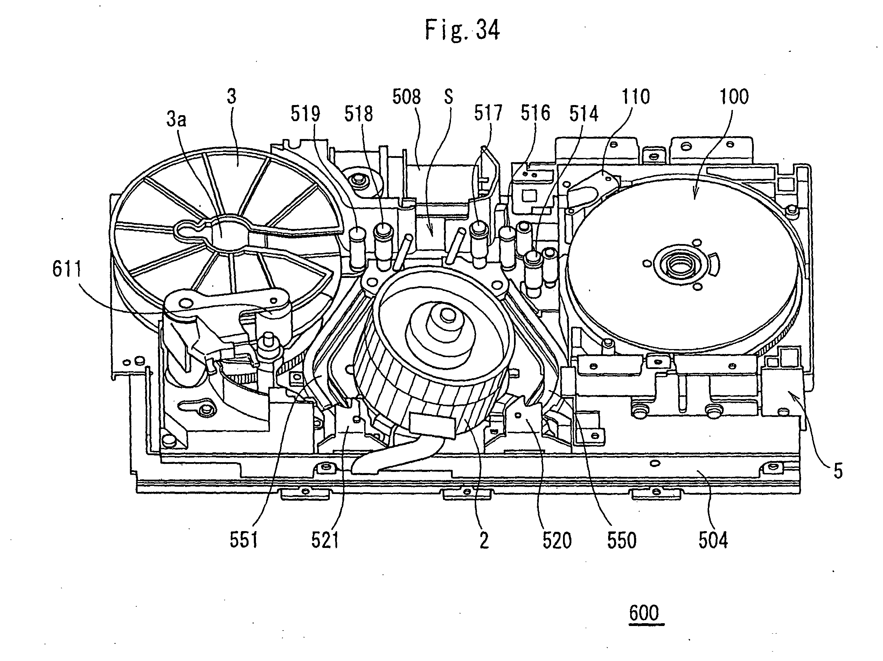

Here, one example of a specific configuration of the tape drive is described with reference to Fig. 34 to Fig. 37.

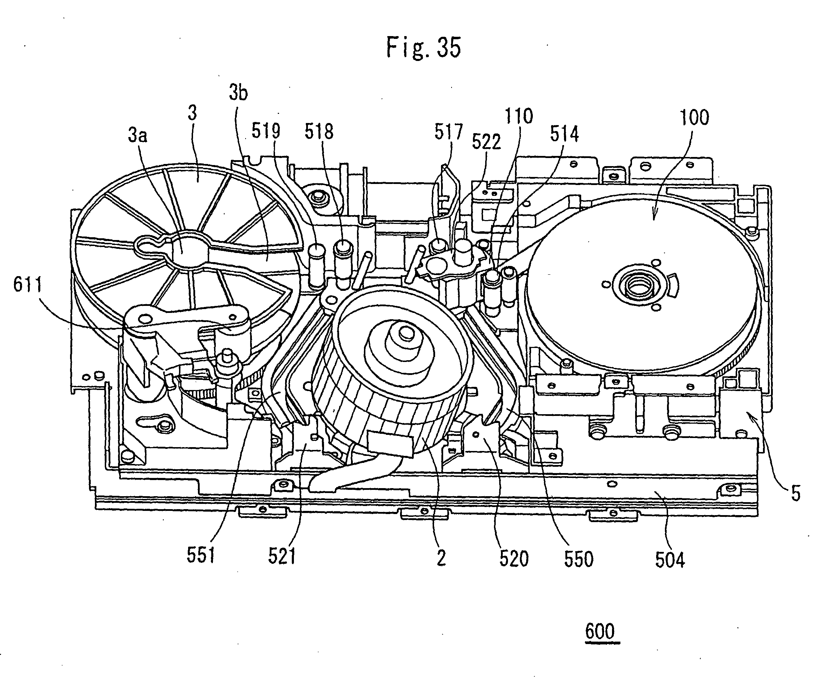

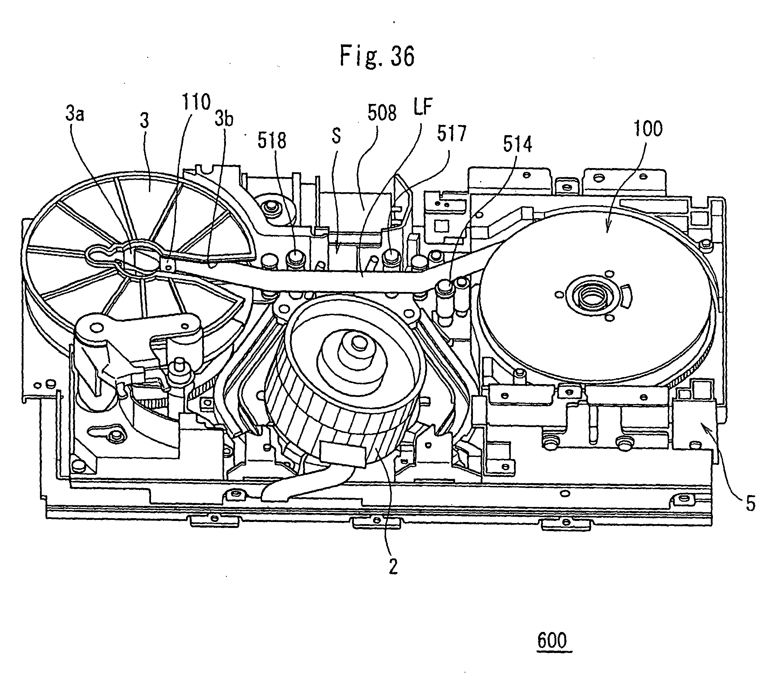

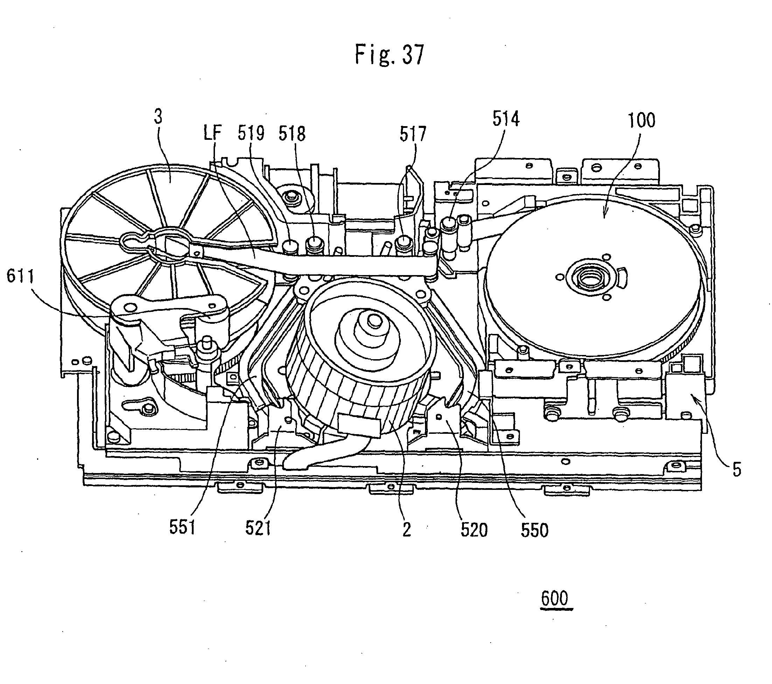

Fig. 34 is a perspective view showing the specific structure of the tape drive. Fig. 35 is a perspective view showing a state in which the leader block is pulled out from the tape cartridge in the tape drive apparatus in Fig. 34. Fig. 36 is a perspective view showing a state in which the pulling out of the leader block from the tape cartridge has been completed. Fig. 37 is a perspective view showing a state in which the movable guide near the opening in the tape cartridge is moved to a predetermined position.

A tape drive 600 shown in Fig. 34 has the head drum 2, the take-up reel 3 and the cartridge loading section 5.

Guide rails 550 and 551, which curve along the outer circumference of the head drum 2, are provided on a base 504 on both sides of the head drum 2. An S coaster 517 for holding the tape guide is movably provided in the guide rail 550, and a T coaster 518 for holding the tape guide is movably provided in the guide rail 551. Coaster receivers 520 and 521 are provided in the end sections of the guide rails 550 and 551, respectively, and the coaster receivers 520 and 521 bind the S coaster 517 and the T coaster 518 that have reached them.

In addition, in the take-up reel 3, a loading section 3a, into which the leader block 110 is loaded, is formed at the center portion. A guide section 3b for guiding the leader block 110 is formed continuously with this loading section 3a.

Moreover, a pinch roller raising/lowering mechanism 611 and a capstan motor are placed adjacent to the take-up reel 3.

A region S surrounded by the tape cartridge 100 loaded into the cartridge loading section 5, the head drum 2, the take-up reel 3 and a loading block 508 is a region through which the leader block 110 that is pulled out from the tape cartridge 100 and carried passes. A plurality of tape guides 516 and 519 and the like besides the tape guides held by the S coaster 517 and the T coaster 518 are placed in this region S. Moreover, a movable guide 514 is provided near the opening section in the tape cartridge 100 loaded into the cartridge loading section 5.

In the tape drive 600 of the above-mentioned configuration, as shown in Fig. 35, a transporter coaster 522 chucks the leader block 110 and pulls it out from the tape cartridge. The transporter coaster 522 is equipped with the above-mentioned chucking mechanism 300. The pull-out direction for the leader block 110 by the transporter coaster 522 is an oblique direction as in the above-mentioned modes.

The transporter coaster 522 is carried towards the guide section 3b of the take-up reel 3 so as not to contact the plurality of tape guides existing in region S.

By the carrying of the leader block 110 by transporter coaster 522, as shown in Fig. 36, the leader block 110 is loaded into the loading section 3a of the take-up reel 3. In this state, the tape LT supplied from the tape cartridge 100 is obliquely oriented in the vicinity of the opening in the tape cartridge 100.

From the state shown in Fig. 36, the movable guide 514 provided near the opening in the tape cartridge 100 is moved to the position shown in Fig. 37, and the running path of the magnetic tape near the opening in the tape cartridge 100 is defined. This state is the state explained in Fig. 34.

Thereafter, by having the S coaster 517 and the T coaster 518 move towards the coaster receiver 520 and the coaster receiver 521, the tape is wound around the head drum 2 by the tape guides held by the S coaster 517 and the T coaster 518.

As mentioned above, according to the present invention, because the chucking gear that engages with the rotational shaft on the tape drive apparatus side is configured with a perpendicular wall surface, floating during rotation and idling of the tape reel can be prevented. Consequently, it is possible to ensure the running stability and linearity of the magnetic tape and it is possible to improve the reliability of the cartridge with regard to high speed operations.

## Claims

1. A tape reel, which is a tape reel equipped with first and second flange sections for guiding a tape from both sides, and in which a chucking gear, which engages with a gear section formed on a tip section of a rotational shaft a tape drive apparatus is equipped with, is formed annularly in a center portion of the bottom surface of the tape reel,
the tape reel **characterized in that** floating with respect to said rotational shaft during rotation is suppressed by having said chucking gear be equipped with a pair of side surfaces that are substantially perpendicular with respect to the bottom surface of the tape reel.

2. The tape reel according to Claim 1 **characterized in that**
a rotation restricting gear for restricting the rotation of said tape reel is provided on an outer circumference of one of said first and second flange sections, and
it further comprises contact prevention means for preventing contact between said rotation restricting gear and the tape upon winding said tape around said tape reel or supplying said tape from said tape reel.

3. The tape reel according to Claim 2 **characterized in that**
said contact prevention means is an end surface of said rotation restricting gear on the side that faces said tape, and is a tapered surface formed in such an orientation that the distance between the tape and itself is separated more towards the outer circumference of said rotation restricting gear.

4. The tape reel according to Claim 2 **characterized in that** in said contact prevention means, a surface that guides said tape of one of said first and second flange sections on which said rotation restricting gear is formed is a tapered surface formed in such an orientation that the distance between the tape and itself is separated more towards the outer circumference.

5. A tape cartridge equipped with a single tape reel around which a magnetic tape is wound and a housing for rotatably housing said tape reel, said tape cartridge **characterized in that**
a chucking gear that engages with a gear section formed on a tip section of a rotational shaft a tape drive apparatus is equipped with is formed in a center portion of the bottom surface of said tape reel, and
said chucking gear has a pair of side surfaces that are substantially perpendicular with respect to the bottom surface of the tape reel.

6. The tape cartridge according to Claim 5 **characterized in that**
support means for rotatably supporting said tape reel that is linked to said rotational shaft and rotates is positioned within said housing,
said support means has a bearing that engages with the outer circumference of said tape reel, and
an engagement member that has a shaft section that engages with the inner circumference of said bearing, and
said engagement member receives leakage substance leaked from within said bearing, and has a leakage substance receiving section that is capable of preventing said leakage substance from being spread within said housing.

7. The tape cartridge according to Claim 6 **characterized in that** said leakage substance is a lubricant sealed in said bearing.

8. The tape cartridge according to Claim 6 **characterized in that** said leakage substance receiving section is provided with an absorbing sheet for absorbing said leakage substance.

9. The tape cartridge according to Claim 6 **characterized in that** said support means includes a coil spring for biasing said engagement member towards the side of said reel, and said engagement member is provided with holding means for holding the assembly orientation of said coil spring.

10. The tape cartridge according to Claim 9 **characterized in that** said coil spring is inserted into an insertion section formed in an upper section of said engagement member, while
said holding means comprises a plurality of protrusions formed around said insertion section and with which said coil spring is in elastic contact.

11. The tape cartridge according to Claim 9 **characterized in that**
said coil spring is inserted into an insertion section formed in an upper section of said engagement member, while
said holding means comprises a protruding piece formed around said insertion section and with which the outer circumferential edge of said coil spring is in elastic contact.

12. The tape cartridge according to Claim 11 **characterized in that** said protruding piece is formed annularly so as to surround said insertion section.

13. The tape cartridge according to Claim 5 **characterized in that**
said housing comprises an opening for pulling out said tape, while
inside said housing, there is a leader block, which is positioned at a closing position for closing said opening such that it can be pulled out from said housing, and which is connected to one end of the tape wound around said tape reel, and
tape protection means for preventing said tape from becoming cut or damaged due to contact between the tape supplied from said tape reel and an edge section of said opening, which occurs as a result of having said leader block carried in a predetermined path towards a take-up reel of said tape drive apparatus.

14. The tape cartridge according to Claim 13 **characterized in that** said tape protection means is positioned between the tape supplied from said tape reel and the edge section of said opening, and is a column-shaped member having a contact surface comprising a curved surface that contacts said tape.

15. The tape cartridge according to Claim 14 **characterized in that** said column-shaped member is a column-shaped member made of a metal.

16. The tape cartridge according to Claim 5 **characterized in that**
optically transparent windows are each provided on both side surfaces, which are perpendicular with respect to the insertion direction for said tape drive apparatus, of said housing, and
detection light for detecting the tape end and which enters from the window on one side can exit from the window on the other side.

17. The tape cartridge according to Claim 5 **characterized in that** said housing comprises an opening for pulling out said tape, and in said housing, there is a leader block, which is positioned at a closing position for closing said opening such that it can be pulled out, and which is connected to one end of the tape wound around said tape reel,
and **in that** at said closing position, it has engagement means for positioning said leader block through the engagement between a portion of said housing and a portion of said leader block, and
elastic means for biasing said leader block so as to maintain said engaged state of said engagement means.

18. The tape cartridge according to Claim 17 **characterized in that** said engagement means positions said leader block at said closing position through an engagement between a protrusion section formed on one of said leader block and said housing, and a recess section formed on the other of said leader block and said housing, and restricts the rotation of said leader block, and
said elastic means biases in a direction in which said protrusion section and said recess section engage with said leader block such that said engagement can be released.

19. The tape cartridge according to Claim 18 **characterized in that** said housing comprises a rib for defining said closing position and for guiding said leader block to said closing position, and has biasing means for biasing said leader block towards said rib.

20. The tape cartridge according to Claim 17 **characterized in that** the engagement between a portion of said housing and a portion of said leader block is released by the chucking of said leader block by said tape drive apparatus.
